# EUROPEAN PATENT APPLICATION

(11) **EP 4 661 163 A1**
(43) Date of publication of application: **10.12.2025**
(21) Application number: 25180930.7
(22) Date of filing: 05.06.2025
(51) Int. Cl.: H01M 10/613, B64C 29/00, B64D 31/16, H01M 10/625, H01M 10/643, H01M 10/6557, H01M 10/6568

(54) **OPPOSED LIQUID COOLANT FLOW THERMAL MANAGEMENT ASSEMBLIES FOR SECONDARY BATTERY MODULES, AND BATTERY MODULES AND ELECTRIC VEHICLES INCLUDING SAME**

(30) Priority: 07.06.2024 US 202418737328
(71) Applicant: Textron eAviation Inc., Wichita, KS 67218 (US)
(72) Inventor: McQUARY, Christopher Thomas, Wichita, KS 67218 (US); PIRNAR, Jernej, Wichita, KS 67218 (US)
(74) Representative: DeltaPatents B.V.

(57) **Abstract**

Thermal management assemblies are described to provide thermal management to an array of individual secondary battery cells of a battery module by allowing an opposed countercurrent flow to be in heat-exchange relationship with the individual battery cells. The thermal management assembly comprises a pair of spatially separated liquid distribution manifolds (**30**, **32**), and a plurality of cooling plates (**34**) extending between and being fluid-connected at each of the opposed ends thereof to a respective one of the spatially separated liquid distribution manifolds (**30**, **32**), wherein: each of the spatially separated liquid distribution manifolds (**30**, **32**) defines first and second liquid distribution channels (**30**a, **30**b, **32**a, **32**b), and each of the cooling plates (**34**) extends between the pair of spatially separated liquid distribution manifolds (**30**, **32**) such that a first cooling channel of each of the cooling plates is fluid-connected to each of the first liquid distribution channels (**30**a, **32**a) of the spatially separated liquid distribution manifolds (**30**, **32**) and a second cooling channel of each of the cooling plates (**34**) is fluid-connected to each of the second liquid distribution channels (**30**b, **32**b) of the spatially separated liquid distribution manifolds.

## Description

### TECHNICAL FIELD

The embodiments disclosed herein relate generally to thermal management assemblies for secondary battery modules. In especially preferred forms, the embodiments disclosed herein relate to thermal management assemblies for secondary battery modules that include directionally opposed (countercurrent) liquid coolant flows which provide more uniform thermal management (cooling) for the individual secondary battery cells in the battery modules. The directionally opposed flow thermal management assemblies of the embodiments disclosed herein are especially usefully employed for on-board battery modules which power the electric motors of electric vehicles (EVs), especially electric aircraft such as electric vertical take-off and landing (eVTOL) aircraft.

### BACKGROUND

There has been considerable interest recently with replacing the motive power provided to vehicles by conventional internal combustion engines with electric motors to thereby reduce combustion products emitted into the environment and energy reliance on fossil fuels. Electric vehicles (EVs) powered by electric motors are thus considered to be a more environmentally friendly alternative to conventional internal combustion powered vehicles.

EVs however necessarily require a source of electrical energy to power the electric motors. Typically the electrical energy is provided by one or more on-board battery modules which include a plurality of individual secondary battery cells connected operatively to one another as may be required for the specific application. The stored electrical energy in such battery cells is therefore collected and used to energize the electric motors which provide motive power to the EV.

The use of secondary battery cells however requires thermal management of the battery module during discharge and charge modes to ensure that the individual battery cells do not overheat which can decrease the design electrical power output for the battery module. In extreme cases, excess overheating of the battery cells could present a fire hazard. Thus, in order to minimize (if not prevent entirely) the possibility of overheating, battery modules are typically provided with a cooling system for the purpose of thermal management.

Conventional liquid cooling systems for secondary battery modules are usually provided with a unidirectional flow of liquid coolant in heat exchange relationship with the individual battery cells within the module. The unidirectional flow of liquid coolant however results in uneven temperature distribution within the battery module. Thus, conventional thermal management systems for battery modules will usually address uneven temperature distribution within the battery module by providing a relatively complex manifold routing which not only increases costs but also weight. Any increased weight penalty provided by conventional liquid cooling systems is undesirably problematic for electric aircraft, such an electric vertical takeoff and landing (eVTOL) aircraft. It is therefore towards providing solutions to such problems that the embodiments disclosed herein are directed.

### SUMMARY

The embodiments disclosed herein are broadly concerned with thermal management assemblies that provide thermal management of a battery array comprised of individual secondary batteries. The thermal management assemblies and associated secondary battery arrays may thus be usefully employed in battery modules to provide electrical power to electric motors associated with electric vehicles (e.g., electric aircraft, cars, busses, trucks, trains and the like). Aspects and features are defined in the appended claims.

According to a first aspect of the disclosure, a thermal management assembly is described to provide thermal management to an array of individual secondary battery cells (e.g. secondary batteries) of a battery module. The thermal management assembly includes a pair of spatially separated liquid distribution manifolds as well as a plurality of cooling plates extending between and being fluid-connected at each of the opposed ends thereof to a respective one of the spatially separated liquid distribution manifolds. Each of the spatially separated liquid distribution manifolds defines first and second liquid distribution channels. Each of the cooling plates extends between the pair of spatially separated liquid distribution manifolds such that the first cooling channel of each of the cooling plates is fluid-connected to each of the first liquid distribution channels of the spatially separated liquid distribution manifolds and the second cooling channel of each of the cooling plates is fluid-connected to each of the second liquid distribution channels of the spatially separated liquid distribution manifolds.

In some embodiments, each of the spatially separated liquid distribution manifolds may include first and second ports in fluid communication with the first and second distribution channels thereof. Optionally, the first and second ports may be positioned at the first end of each of the spatially separated liquid distribution manifolds. Additionally or alternatively, according to some embodiments, the spatially separated liquid distribution manifolds may be tapered from the first end to an opposite second end thereof. The cooling plates may be undulated between the opposed ends thereof, e.g., so as to ensure conforming heat-exchange surface contact with predetermined ones of the individual cylindrically shaped battery cells forming a battery array of a battery module.

Additionally or alternatively, the first and second ports of the spatially separated liquid distribution manifolds may be respectively adapted to receive or discharge a liquid coolant therethrough so as to establish respective directionally opposed (countercurrent) flows of the liquid coolant within the first and second cooling channels of each of the cooling plates. Thus, a first flow of liquid coolant introduced through a first port associated with a first one of the liquid distribution manifolds will flow through a respective first liquid distribution channel thereof and then through a respective first cooling channel of the cooling plates and into the first distribution channel of a second one of the liquid distribution manifolds so as to be discharged through a second port associated with the second one of the liquid distribution manifolds. A directionally opposed flow of liquid coolant may thereby be established by a second flow of liquid coolant introduced though a second port associated with the second one of the liquid distribution manifolds which will flow through a respective second liquid distribution channel thereof and then through a respective second cooling channel of the cooling plates and into the second distribution channel of the first one of the liquid distribution manifolds so as to be discharged through a second port associated with the first one of the liquid distribution manifolds.

According to a second aspect of the disclosure, a battery module is provided. The battery array comprises a plurality of individual secondary battery cells and the thermal management assembly described herein. Each of the cooling plates of the thermal management assembly is in heat exchange relationship with predetermined ones of the individual secondary battery cells.

In some embodiments, each of the individual battery cells may be cylindrical, and each of the cooling plates may be undulated between the opposed ends thereof so as to be in conforming heat-exchange contact with the predetermined ones of the individual battery cells.

According to a third aspect of the disclosure, an electric vehicle is provided, the electric vehicle comprises an electric motor and at least one battery module as described herein to provide a source of electric power to the electric motor.

In some embodiments, the electric vehicle may further comprise a closed loop liquid coolant arrangement to supply a liquid coolant to the thermal management system of the at least one battery module. The closed loop liquid coolant arrangement may be an onboard closed loop liquid coolant arrangement. Optionally, the (e.g. onboard) closed loop liquid coolant arrangement may comprise a liquid coolant system (LCS), which may include a gas/liquid heat exchanger as well as a vapor cooling system (VCS) arranged to be in heat exchange relationship with liquid coolant supplied to the gas/liquid heat exchanger by the LCS.

In some embodiments, the electric vehicle may be an electric aircraft, such as an electric vertical takeoff and landing (eVTOL) aircraft.

According to a fourth aspect of the disclosure, a battery pack is provided, the battery pack comprising a plurality of battery modules as described herein.

These and other aspects and advantages of the present invention will become more clear after careful consideration is given to the following detailed description of the preferred exemplary embodiments thereof.

### BRIEF DESCRIPTION OF THE DRAWINGS

The disclosed embodiments of the present invention will be better and more completely understood by referring to the following detailed description of exemplary non-limiting illustrative embodiments in conjunction with the drawings of which:
FIG. 1 is a plan view of an exemplary eVTOL aircraft provided with an exemplary battery pack having at least one battery module in accordance with an embodiment of the invention disclosed herein and its associated coolant systems to provide liquid coolant to the battery module and extract generated heat therefrom;
FIG. 2 is a top front perspective view of an exemplary battery module having an opposed flow of coolant liquid therewithin that may be employed in the battery pack of the eVTOL aircraft depicted in FIG. 1;
FIG. 3 is a bottom side elevational view of the exemplary battery module depicted in FIG. 2;
FIG. 4 is a top plan view of the exemplary battery module with the upper cell holder cover removed to thereby reveal the individual battery cells therein;
FIG. 5 is an enlarged view of a portion of the battery module as shown in FIG. 4;
FIG. 6 is a perspective view of the opposed flow battery cell cooling system with the individual battery cells removed to improve clarity; and
FIG. 7 is an enlarged view of a portion of the opposed flow battery cell cooling system as shown in FIG. 6.

### DETAILED DESCRIPTION OF EMBODIMENTS

Various embodiments of the disclosure will now be described with reference to the enclosed figures. The depictions in the figures illustrate combinations of features of the disclosure, although it is to be understood that not all features are required in the depicted combinations. For example, although the figures show and refer to an eVTOL aircraft, it is to be understood that this is merely exemplary and the features described and illustrated herein may be incorporated in any electric vehicle.

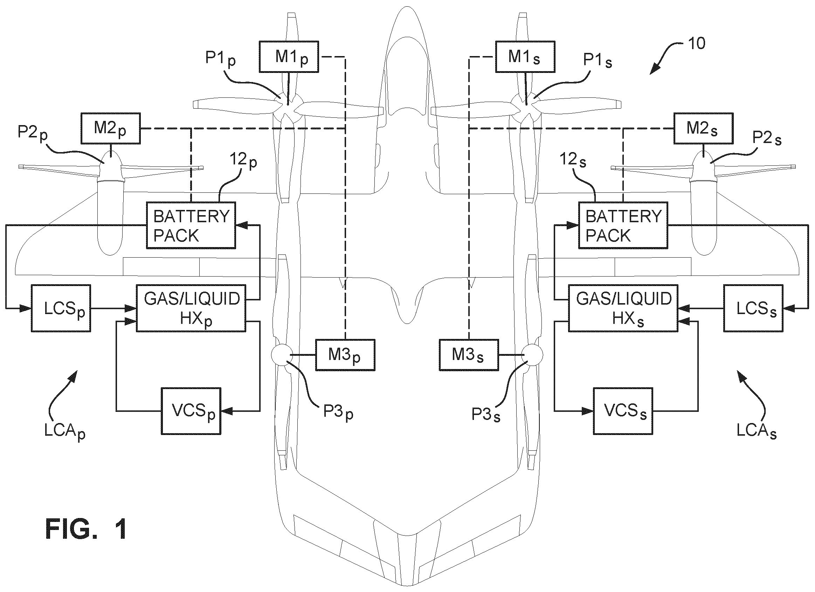

Accompanying FIG. 1 schematically depicts an exemplary eVTOL aircraft 10. The eVTOL aircraft 10 of FIG. 1 is provided with port and starboard battery modules 12p, 12s which respectively provide electrical power to the port side electric motors M1p-M3p and starboard side electric motors M1s-M3s which serve to drive the portside and starboard side propellers P1p-P3p and P1s-P3s, respectively. The operation of the propellers P1p-P3p and P1s-P3s thereby provide the needed lift and/or thrust for the eVTOL aircraft 10 to takeoff and land vertically as well as to be propelled during normal cruise flight. As is known, the propellers P1p and P1s may be associated with tilt nacelles so as to generate sufficient lift for vertical takeoff and landing when in a vertical position but also provide thrust for cruise flight when in a horizontal position.

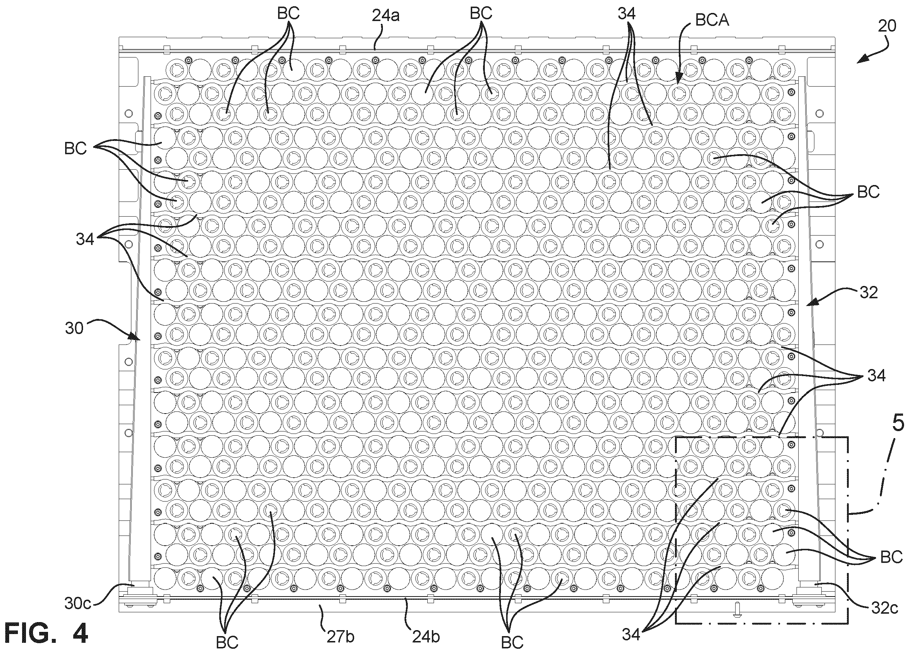

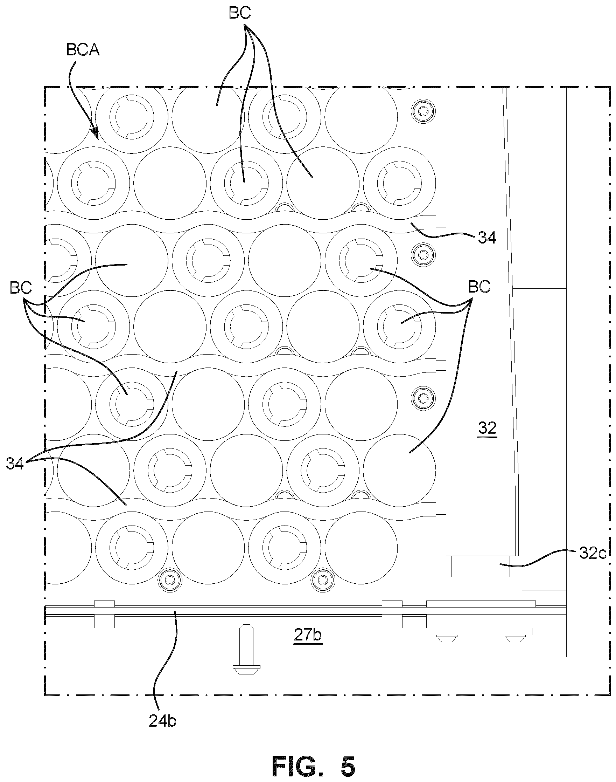

Thermal management of the battery modules 12p, 12s is provided by a closed loop liquid coolant arrangement LCAp, LCAs comprised of a liquid cooling system LCSp, LCSs having a gas/liquid heat exchanger HXp, HXs in operative heat exchange relationship with a vapor cooling system VCSp, VCSs, respectively. The closed loop liquid coolant arrangement LCAp, LCAs may also be referred to as an onboard closed loop liquid coolant arrangement. A cooled liquid coolant can thereby be discharged from the HXp, HXs after having been cooled by heat transfer therein with the cooled vapor of the VCSp, VCSs and supplied to each of the battery modules 12p, 12s. As will be explained in greater detail below, the cooled liquid is circulated in heat exchange relationship with the individual cylindrical secondary battery cells (a representative few of which are identified as BC in FIGS. 4 and 5) through the battery modules 12p, 12s in an opposed flow manner. The heat can be collected by the coolant liquid and then directed to the LCSp, LCSs where it can again be cooled by the HXp, HXs and returned to the battery module 12p, 12s, respectively.

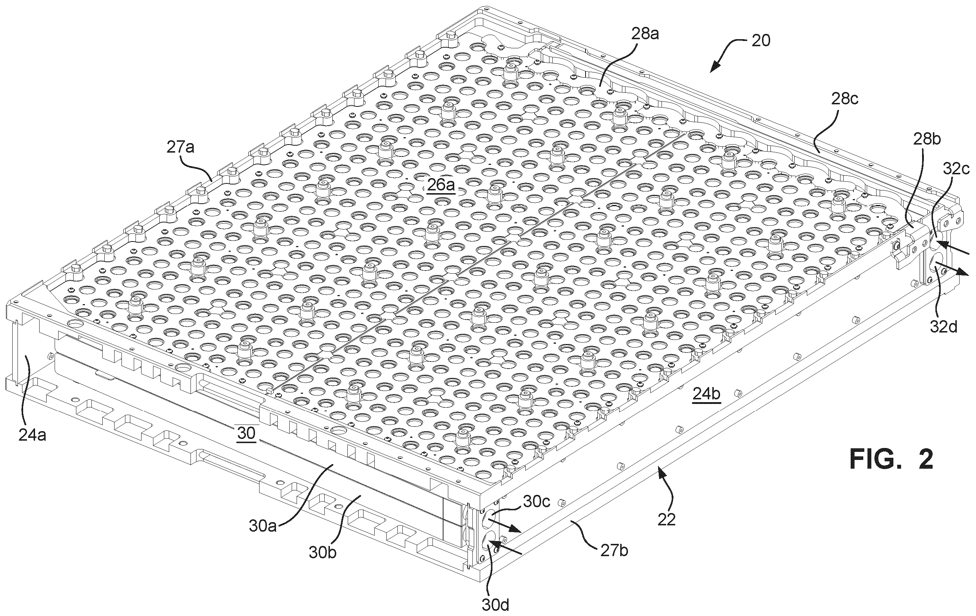

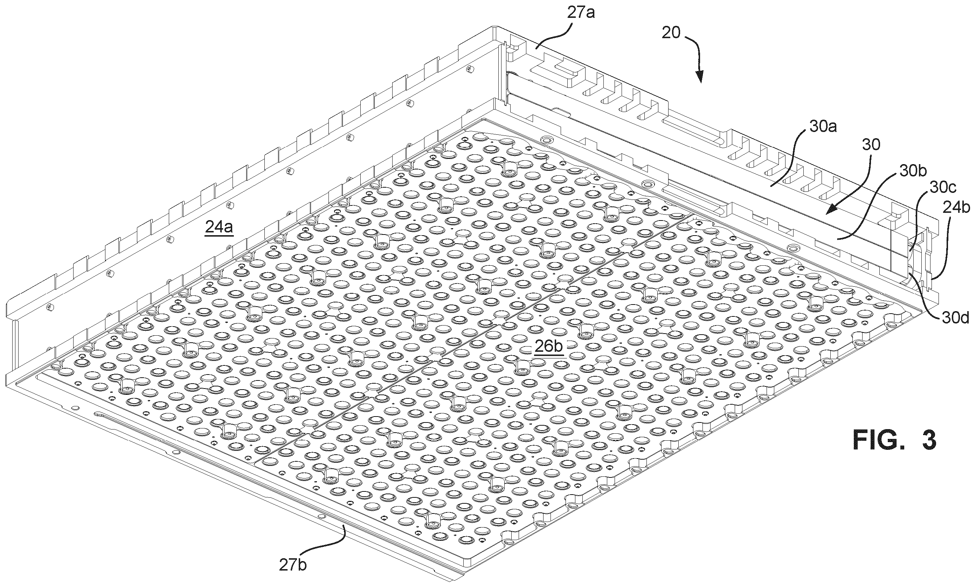

Accompanying FIGS. 2 and 3 depict an exemplary battery module 20 according to embodiments of the disclosure that may be employed in the battery packs 12p, 12s of an electric vehicle, such as the eVTOL aircraft 10 depicted in FIG. 1. It will be understood that each battery pack 12p, 12s will include at least one battery module 20. If multiple battery modules 20 are necessary, they may be stacked or positioned adjacent to one another depending on the structural space of the EV.

The battery module 20 generally includes a frame 22 having forward and aft structural elements 24a, 24b for mounting printed circuit boards (PCBs), an upper battery cell collector PCB 26a and a bottom cell holder 26b held by upper and lower perimetrical battery cell holding frames 27a, 27b. The frame 22 thereby generally defines an interior space to contain a battery cell array BCA of multiple rows of individual cylindrical battery cells BC (see FIGS. 4 and 5) wherein each battery cell BC is positioned in opposite polarity with respect to adjacent battery cells BC in the row. Electrical connections between battery cells are made with bonded wires and busbars 28a. Cell collectors 26a and 26b are used to create parallel connections between battery cells, collect battery cells voltages and transmit the data to the battery management system (BMS). Busbar terminals 28b and 28c transmit electrical energy out of the module 20.

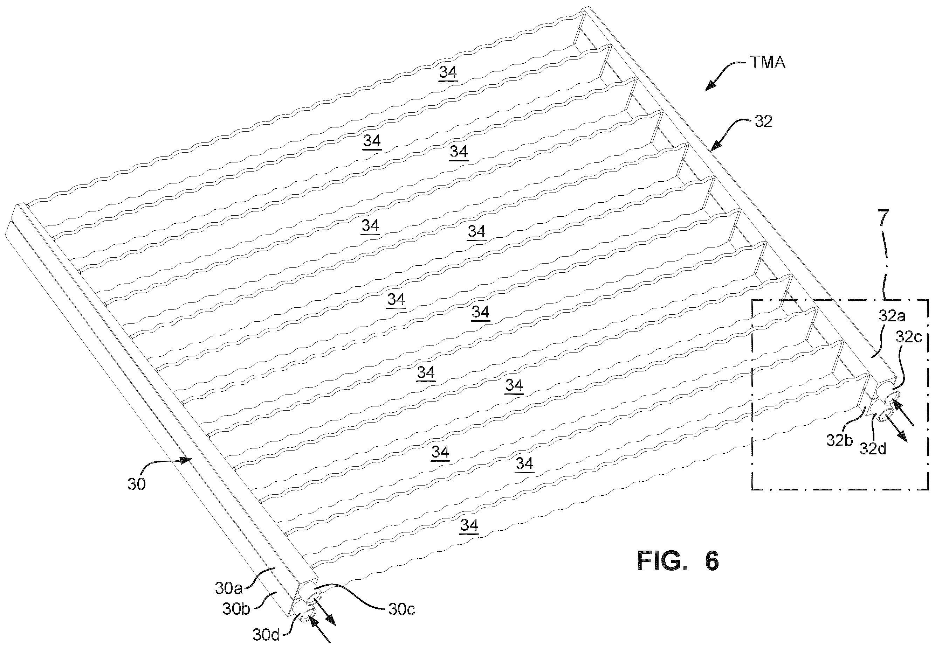

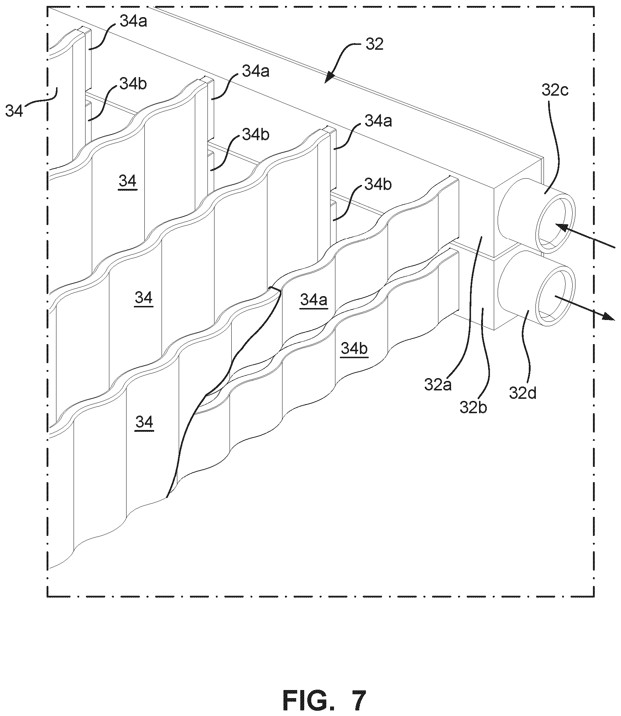

Important to the embodiments described herein, the battery module includes a thermal management assembly TMA (see FIGS. 6 and 7) for the array of battery cells BC. The thermal management assembly TMA includes an opposed pair of distribution manifolds 30, 32, also referred to as liquid distribution manifolds, connected to the upper and lower perimetrical battery cell holding frames 27a, 27b that are spatially separated from one another so as to laterally confine the battery cells BC (see FIGS. 4 and 5) within the space defined by the frame 22. Each of the distribution manifolds defines upper and lower (also referred to as first and second) distribution channels 30a, 30b and 32a, 32b, respectively. The upper and lower distribution channels 30a, 30b and 32a, 32b of the distribution manifolds 30, 32 are in turn respectively fluid connected to terminal ends of upper and lower cooling channels 34a, 34b provided by each cooling plate 34 extending in a crosswise direction between predetermined rows of the array of individual battery cells BC. In other words, each of the cooling plates 34 extends between the pair of spatially separated liquid distribution manifolds 30, 32 such that a first (e.g. upper) cooling channel 34a of each of the cooling plates 34 is fluid-connected to each of the first liquid distribution channels of the spatially separated liquid distribution manifolds and a second (e.g. lower) cooling channel 34b of each of the cooling plates 34 is fluid-connected to each of the second liquid distribution channels of the spatially separated liquid distribution manifolds.

The aft end of each upper and lower distribution channels 30a, 30b and 32a, 32b of the distribution manifolds 30, 32 define upper and lower ports 30c, 30d and 32c, 32d, respectively (these are also referred to as first and second ports, respectively). The upper and lower ports 30c, 30d and 32c, 32d, respectively, thereby provide inlets or outlets for cooling liquid to flow into the upper and lower distribution channels 30a, 30b and 32a, 32b of the distribution manifolds 30, 32 in order to establish opposed flow paths through the upper and lower cooling channels 34a, 34b of each cooling plate 34.

By way of example, in the embodiment depicted in FIGS. 2 and 6 herein, the lower port 30d associated with the lower distribution channel 30b of the distribution manifold 30 serves as a liquid coolant inlet which thereby supplies liquid coolant to the lower cooling channels 34b of each cooling plate 34. The liquid coolant will thereby flow through the lower cooling channels 34b in heat exchange relationship with respective battery cells BC in the battery cell array BCA. The liquid coolant can then flow into the lower distribution channel 32b of the distribution manifold 32 where it is thereafter discharged through the lower port 32d thereof. In order to achieve opposed flow paths, therefore, the upper port 32c of distribution manifold 32 will serve as a liquid coolant inlet directing liquid coolant flow into the upper distribution channel 32a and then through the upper cooling channels 34a of each cooling plate 34 in heat exchange relationship with respective battery cells BC in the battery cell array BCA. The liquid coolant then flows into the upper distribution channel 30a of the distribution manifold 30 where it is thereafter discharged through the upper port 30c thereof. Thus, in the liquid coolant flow arrangement described above, there is an opposed flow of liquid coolant within the upper and lower coolant channels 34a, 34b of each coolant plate 34. The flow paths described above could of course be reversed if desired to still provide opposed flow of the liquid coolant within the cooling plates 34.

In some embodiments, as illustrated in the figures, each of the distribution manifolds 30, 32 may be tapered from the aft-side ports 30c, 30d and 32c, 32d, respectively, toward the opposed forward-side ends thereof. Thus, each of the distribution channels 30a, 30b and 32a, 32b has the widest width dimension at the aft-side end of the distribution manifold 30, 32 and the narrowest width dimension at the forward end of the distribution manifold 30, 32, respectively.

In some embodiments, each of the cooling plates 34 may have an undulating shape so as to conform to the cylindrical surfaces of the individual battery cells BC in each of the respective adjacent rows of the battery cell array BCA between which the cooling plates 34 are interposed. Such an undulating shape of the cooling plates 34 thereby ensures that the cooling plates 34 are in contact with a maximum surface area of each battery cell BC in the battery cell array BCA to ensure optimum heat exchange performance.

As the liquid coolant flows in opposed directions through the upper and lower cooling channels 34a, 34b of the cooling plates 34, the cooling liquid having the coolest temperature will be encountered by the initial series of battery cells BC in each row of the battery cell array BCA and that the cooling liquid having the warmest temperature will be encountered by the final series of battery cells BC in each row of the battery cell array BCA due to the heat exchange relationship between the cooling plates 34 and the individual battery cells BC. In the absence of the counterflow relationship of the embodiments described herein (i.e., in a conventional unidirectional flow arrangement), the battery cell array BCA would exhibit a significant temperature gradient between the inlet and outlet of the distribution manifolds. However, by virtue of the directional counterflow relationship of the liquid coolant respectively within the upper and lower coolant channels 34a, 34b, the temperature across the battery cell array BCA will be more equalized.

Certain directional references have been made with respect to the structural components shown in the accompanying Figures and described hereinabove. For example, terms such as "forward", "aft", "right", "left", "upper", "lower" and like terms may have been employed in the structural description of the preferred embodiments. Such directional terms are not limiting to the invention but instead are merely present so as to describe the positional association of certain structural components in the disclosed embodiments. In use, therefore, the embodiments disclosed herein could be adapted so that the positional association of the structural components is reversed to that described herein.

Therefore, while reference has been made to particular embodiments of the invention, various modifications within the skill of those in the art may be envisioned. For example, while the description above is directed toward battery modules which include the opposed flow cooling system as shown and described which are associated with an eVTOL aircraft, the battery modules could be adapted to be employed in virtually any other electric vehicle, for example, electric cars, busses, trucks, trains and the like. Therefore, it is to be understood that the invention is not to be limited to the disclosed embodiments, but on the contrary, is intended to cover various modifications and equivalent arrangements included within the scope thereof.

## Claims

1. A thermal management assembly to provide thermal management to an array of individual secondary batteries of a battery module (20), the thermal management assembly comprising:
a pair of spatially separated liquid distribution manifolds (30, 32), and
a plurality of cooling plates (34) extending between and being fluid-connected at each of the opposed ends thereof to a respective one of the spatially separated liquid distribution manifolds (30, 32), wherein:
each of the spatially separated liquid distribution manifolds (30, 32) defines first and second liquid distribution channels (30a, 30b, 32a, 32b), and
each of the cooling plates (34) extends between the pair of spatially separated liquid distribution manifolds (30, 32) such that a first cooling channel (34a) of each of the cooling plates is fluid-connected to each of the first liquid distribution channels (30a, 32a) of the spatially separated liquid distribution manifolds (30, 32) and a second cooling channel (34b) of each of the cooling plates (34) is fluid-connected to each of the second liquid distribution channels (30b, 32b) of the spatially separated liquid distribution manifolds.

2. The thermal management assembly according to claim 1, wherein each of the spatially separated liquid distribution manifolds (30, 32) is tapered from a first end to an opposite second end thereof.

3. The thermal management assembly according to claim 1 or claim 2, wherein each of the spatially separated liquid distribution manifolds (30, 32) includes first and second ports (30c, 30d, 32c, 32d) in fluid communication with the first and second distribution channels (30a, 30b, 32a, 32b) thereof.

4. The thermal management assembly according to claim 3, wherein the first and second ports (30c, 30d, 32c, 32d) are positioned at a first end of each of the spatially separated liquid distribution manifolds.

5. The thermal management assembly according to any preceding claim, wherein each of the cooling plates (34) is undulated between the opposed ends thereof.

6. The thermal management assembly according to any preceding claim, wherein each of the first and second ports (30c, 30d, 32c, 32d) of the spatially separated liquid distribution manifolds (30, 32) is respectively adapted to receive or discharge a liquid coolant therethrough so as to establish respective directionally opposed flows of the liquid coolant within the first and second cooling channels (30c, 30d, 32c, 32d) of each of the cooling plates (34).

7. The thermal management assembly according to claim 6, wherein a first flow of liquid coolant introduced though a first port associated with a first one of the liquid distribution manifolds will flow through a respective first liquid distribution channel thereof and then through a respective first cooling channel of the cooling plates and into the first distribution channel of a second one of the liquid distribution manifolds so as to be discharged through a first port associated with the second one of the liquid distribution manifolds, and wherein
a second flow of liquid coolant introduced though a second port associated with the second one of the liquid distribution manifolds will flow through a respective second liquid distribution channel thereof and then through a respective second cooling channel of the cooling plates and into the second distribution channel of the first one of the liquid distribution manifolds so as to be discharged through a second port associated with the first one of the liquid distribution manifolds.

8. A battery module (20) comprising:
a battery array comprising a plurality of individual secondary battery cells; and the thermal management assembly according to any preceding claim, wherein each of the cooling plates (34) of the thermal management assembly is in heat exchange relationship with predetermined ones of the individual secondary battery cells.

9. The battery module (20) according to claim 8, wherein
each of the individual battery cells is cylindrical, and wherein
each of the cooling plates (34) is undulated between the opposed ends thereof so as to be in conforming heat-exchange contact with the predetermined ones of individual battery cells.

10. An electric vehicle which comprises:
an electric motor, and
at least one battery module (20) according to claim 8 or claim 9 to provide a source of electrical power to the electric motor.

11. The electric vehicle according to claim 10, further comprising a closed loop liquid coolant arrangement to supply a liquid coolant to the thermal management system of the at least one battery module (20).

12. The electric vehicle according to claim 10 or claim 11, wherein the electric vehicle is an electric aircraft.

13. The electric vehicle according to claim 12, wherein the electric aircraft is an electric vertical takeoff and landing (eVTOL) aircraft.

14. The electric vehicle according to any one of claims 11 to 13, wherein the closed loop liquid coolant arrangement comprises a liquid coolant system, LCS, which includes a gas/liquid heat exchanger, and a vapor cooling system, VCS, arranged to be in heat exchange relationship with liquid coolant supplied to the gas/liquid heat exchanger by the LCS.

15. A battery pack (12p, 12s) comprising a plurality of battery modules, wherein each battery module in the battery pack is the battery module according to claim 8 or claim 9.
